# EUROPÄISCHE PATENTSCHRIFT

(11) **EP 2 460 904 B1**
(45) Veröffentlichungstag und Bekanntmachung des Hinweises auf die Patenterteilung: **11.04.2018**
(21) Anmeldenummer: 11191806.6
(22) Anmeldetag: 02.12.2011
(51) Int. Cl.: C22C 38/42, C22C 38/46, C22C 38/48, C22C 38/50, C22C 38/58, H01M 8/02, C22C 38/00

(54) **Austenitischer Stahl für die Wasserstofftechnik**
Austenitic steel for hydrogen technology
Acier austénitique pour la technique à l'hydrogène

(30) Priorität: 03.12.2010 DE 102010053385
(43) Veröffentlichungstag der Anmeldung: 06.06.2012
(73) Patentinhaber: Bayerische Motoren Werke Aktiengesellschaft, 80809 München (DE)
(72) Erfinder: Naumann, Jörg, 85375 Neufahrn (DE); Leistner, Wolfgang, 80999 München (DE); Theissen, Werner Prof. Dr. Ing., 45527 Hattingen (DE); Weber, Sebastian Dr., 45147 Essen (DE); Michler, Thorsten Dr., 65187 Wiesbaden (DE)

(56) Entgegenhaltungen:
- EP-A1- 2 058 415
- WO-A1-98/33224
- DE-A1- 1 433 111
- DE-A1-102007 020 027
- DE-A1-102008 005 803
- DE-B4- 10 297 495
- JP-A- 5 098 395
- JP-A- 9 143 633
- JP-A- 2003 160 843
- JP-A- 2010 121 190
- US-A- 3 476 556
- US-A- 3 795 509
- US-A- 5 431 753
- US-A- 5 565 167
- US-A1- 2004 191 109
- US-A1- 2005 178 477
- US-A1- 2007 267 107
- US-A1- 2008 292 489
- US-A1- 2009 159 602
- US-A1- 2010 047 105
- ALANEME K K ET AL: "Effect of copper addition on the fracture and fatigue crack growth behavior of solution heat-treated SUS 304H austenitic steel", MATERIALS SCIENCE AND ENGINEERING A: STRUCTURAL MATERIALS:PROPERTIES, MICROSTRUCTURE & PROCESSING, LAUSANNE, CH, Bd. 527, Nr. 18-19, 15. Juli 2010 (2010-07-15), Seiten 4600-4604, XP027068025, ISSN: 0921-5093, DOI: 10.1016/J.MSEA.2010.04.018 [gefunden am 2010-04-13]
- YUH C ET AL: "Status of carbonate fuel cell materials", JOURNAL OF POWER SOURCES, ELSEVIER SA, CH, Bd. 56, Nr. 1, 1. Juli 1995 (1995-07-01), Seiten 1-10, XP004044359, ISSN: 0378-7753, DOI: 10.1016/0378-7753(95)80001-W

## Beschreibung

Die Erfindung bezieht sich auf die Verwendung eines austenitischen Stahls als Werkstoff für die Wasserstofftechnik.

Stahl, der über längere Zeit Wasserstoff ausgesetzt ist, unterliegt der Versprödung. Eine Ausnahme bilden austenitische Edelstähle mit einem hohen Nickelgehalt von 13 Gew.-% und mehr. Sie gehören daher zu den Standardwerkstoffen der Wasserstofftechnik. Durch den hohen Nickelgehalt sind diese Stähle allerdings kostspielig. Auch weisen sie für zahlreiche Bauteile, wie beispielsweise für Rohrleitungen und Faltenbälge, die in der Wasserstofftechnik zum Einsatz kommen, eine zu niedrige Festigkeit auf. Solche Stähle sind z.B. aus US 2004/191109 A1, EP 2 058 415 A1, US 2008/292489 A1 bekannt. Aufgabe der Erfindung ist es daher, einen Stahl für die Wasserstofftechnik bereit zu stellen, der eine hohe Wasserstoffbeständigkeit und Festigkeit sowie eine sehr gute Zähigkeit bei tiefen Temperaturen besitzt und zudem kostengünstig ist.

Dies wird erfindungsgemäß mit den austenitischen Stählen nach den Ansprüchen 1 und 2 erreicht.

Die erfindungsgemäßen Stähle zeichnen sich durch eine hohe Wasserstoffbeständigkeit und Festigkeit (Rp 0,2 - Streckgrenze) sowie einen deutlich reduzierten Nickelgehalt und damit geringere Kosten gegenüber den bekannten Chrom-Nickelstählen für die Wasserstofftechnik aus.

Die Gründe dafür, dass die erfindungsgemäßen Stähle trotz ihres reduzierten Nickelgehalts eine so hohe Wasserstoffbeständigkeit besitzen, dürften unterschiedlich sein.

So weisen Stähle, die Aluminium und/oder Kupfer enthalten, eine hohe Stapelfehlerenergie auf, die der von nickelhaltigen Stählen nahekommt oder sogar übertrifft, so dass die Ursache für die Wasserstoffbeständigkeit der aluminium- bzw. kupferhaltigen Stähle in ihrer hohen Stapelfehlerenergie liegen dürfte.

Demgegenüber weisen die Stähle mit einem hohen Siliziumgehalt, die erfindungsgemäß zum Einsatz kommen, eine besonders hohe Korrosionsbeständigkeit durch die Bildung von Si-Oxiden auf. Mangan wirkt dabei austenitstabilisierend, wodurch es Nickel ersetzen kann.

Die erhöhte Wasserstoffbeständigkeit des erfindungsgemäß verwendeten Stahls ist ferner auf sogenannte "traps", also Wasserstofffallen zurückzuführen, das heißt Stellen im Stahl, durch die eindiffundierender Wasserstoff gebunden wird.

Solche Wasserstofffallen werden insbesondere gebildet, wenn der Stahl eines oder mehrere Elemente der Gruppe: Niob, Titan und Vanadium in Verbindung mit Kohlenstoff und/oder Stickstoff enthält.

Die Wasserstofffallen sind auf die Bildung von Ausscheidungen dieser Elemente mit Kohlenstoff und/oder Stickstoff zurückzuführen. Durch die aus Niob, Titan und/oder Vanadium mit Kohlenstoff und/oder Stickstoff gebildeten Ausscheidungen wird zudem die Festigkeit des Stahls gesteigert.

Der erfindungsgemäß verwendete Stahl weist auch in einer Wasserstoffatmosphäre bei niedrigen Temperaturen hervorragende mechanische Eigenschaften auf.

So weist der erfindungsgemäß verwendete Stahl ein Brucheinschnürungsverhältnis (relative reduction of area = ZH₂ : ZHe x 100 %) von mindestens 70 %, vorzugsweise mindestens 80 %, insbesondere mindestens 90 % auf, gemessen in einer Wasserstoff- und inerten Atmosphäre (vorzugsweise Helium) als Referenz bei einer Temperatur zwischen minus 30°C und minus 120°C, und zwar sowohl mit geglühten und abgeschreckten wie mit kaltverfestigten Zugproben.

Die Zugfestigkeit Rm des erfindungsgemäß verwendeten Stahls beträgt bei einer Temperatur von minus 50°C bei geglühten und abgeschreckten Zugproben 600 bis 1200 MPa und bei kaltverfestigten Zugproben bis 2000 MPa, wobei das Zugfestigkeitsverhältnis (RmH₂: RmHe x 100 %) bei minus 50°C mindestens 90 %, vorzugsweise mehr als 95 % sowohl bei geglühten und abgeschreckten wie kaltverfestigten Zugproben beträgt.

Die Streckgrenze Rp 0,2 des erfindungsgemäß verwendeten Stahls beträgt bei einer Temperatur von minus 50°C bei geglühten und abgeschreckten Zugproben 200 bis 700 MPa und bei kaltverfestigten Zugproben bis 1800 MPa, wobei das Verhältnis der Streckgrenze (Rp 0,2 H₂ : Rp 0,2 He x 100 %) mindestens 90 %, vorzugsweise mehr als 95 % bei minus 50°C sowohl bei geglühten und abgeschreckten wie kaltverfestigten Zugproben beträgt

Die Zugversuche wurden dabei entsprechend DIN EN ISO 6892-1, DIN ISO 15579 und/oder ASTM G 142 durchgeführt, wobei darauf geachtet wurde, dass eine Dehnungsgeschwindigkeit von kleiner als 1 x 10⁻⁴ s⁻¹ bis zum Bruch eingehalten wird.

Als Zugproben wurden Proben der Form B und der Form E nach DIN 50125 verwendet.

Dabei haben sich folgende Stähle als besonders geeignet für die Wasserstofftechnik erwiesen, wobei die nachstehenden %-Angaben Gewichtsprozente bedeuten und der Rest im wesentlichen Eisen und der Phosphorgehalt jeweils < 0,04 % und der Schwefelgehalt jeweils ≤ 0,03 % ist:

### Stahl Nr. 1

C ≤ 0,20 %
Mn 10 - 20 %
Si ≤ 2 %
Ni 4 - 12 %
Cr ≤ 2 %
N ≤ 0,4 %
Cu 1 - 8 %
Nb und/oder Ti und/oder V ≤ 2 %
Al 0,5 bis 10 %

Dabei wird Nickel teilweise ersetzt durch Aluminium, Kupfer und Mangan sowie die durch Niob, Titan bzw. Vanadium in Verbindung mit Stickstoff und Kohlenstoff gebildeten Wasserstofffallen. Das heißt, der Gehalt an Nb und/oder Ti und/oder V beträgt insgesamt mehr als 0,2 % und der von C mehr als 0,04 % und von N mehr als 0,1 %.

### Stahl Nr. 2

C ≤ 0,20 %
Mn 6 - 16 %
Si ≤ 1 %
Ni 4 - 12 %
Cr 10 - 20 %
N ≤ 0,4 %
Cu 1 - 8 %
Nb und/oder Ti und/oder V ≤ 2 %
Al 0,5 bis 10 %

Dabei wird Nickel teilweise ersetzt durch Aluminium, Kupfer und Mangan sowie die durch Niob, Titan bzw. Vanadium in Verbindung mit Stickstoff und Kohlenstoff gebildeten Wasserstofffallen. Der Stahl Nr. 2 zeichnet sich im Gegensatz zum Stahl Nr. 1 darüber hinaus durch seine hohe Korrosionsbeständigkeit aus. Das heißt, der Gehalt an Nb und/oder Ti und/oder V beträgt insgesamt mehr als 0,2 % und der von C mehr als 0,04 % und von N mehr als 0,1 %.

Die Stähle mit der vorstehend angegebenen Zusammensetzung stellen kostengünstige Werkstoffe für die Wasserstofftechnik dar.

Das heißt, sie können für Vorrichtungen und Bauteile von Systemen zur Speicherung, Verteilung und Nutzung von Wasserstoff eingesetzt werden, soweit die Vorrichtungen bzw. Bauteile mit Wasserstoff in Berührung kommen. Dies gilt insbesondere für Leitungen, Regeleinrichtungen, Ventile und andere Absperrorgane, Behälter, Wärmetauscher, Drucksensoren usw., einschließlich Teile dieser Einrichtungen, wie z.B. Federn und Faltenbälge. Aufgrund ihrer hohen Wasserstoffbeständigkeit und Festigkeit halten die Vorrichtungen und Bauteile aus dem erfindungsgemäßen Stahl sehr hohen Drücken stand. Dabei besitzen sie eine hohe Zug-, Dehn- und Dauerfestigkeit.

Die Erfindung bezieht sich insbesondere auf Stähle für die Wasserstofftechnik für Automobile mit Wasserstoffantrieb. Dabei kann zur Wasserstoffspeicherung ein Druckbehälter, insbesondere ein Kryo-Druckbehälter, oder ein Flüssigwasserstoffbehälter aus dem erfindungsgemäßen Stahl eingesetzt werden.

Dabei wird Nickel teilweise durch die aus Lanthan, Yttrium bzw. Neodym in Verbindung mit Stickstoff und Kohlenstoff gebildeten Wasserstofffallen ersetzt.

Die Stähle mit der vorstehend angegebenen Zusammensetzung stellen kostengünstige Werkstoffe für die Wasserstofftechnik dar.

Das heißt, sie können für Vorrichtungen und Bauteile von Systemen zur Speicherung, Verteilung und Nutzung von Wasserstoff eingesetzt werden, soweit die Vorrichtungen bzw. Bauteile mit Wasserstoff in Berührung kommen. Dies gilt insbesondere für Leitungen, Regeleinrichtungen, Ventile und andere Absperrorgane, Behälter, Wärmetauscher, Drucksensoren usw., einschließlich Teile dieser Einrichtungen, wie z.B. Federn und Faltenbälge. Aufgrund ihrer hohen Wasserstoffbeständigkeit und Festigkeit halten die Vorrichtungen und Bauteile aus dem erfindungsgemäßen Stahl sehr hohen Drücken stand. Dabei besitzen sie eine hohe Zug-, Dehn- und Dauerfestigkeit.

Die Erfindung bezieht sich insbesondere auf Stähle für die Wasserstofftechnik für Automobile mit Wasserstoffantrieb. Dabei kann zur Wasserstoffspeicherung ein Druckbehälter, insbesondere ein Kryo-Druckbehälter, oder ein Flüssigwasserstoffbehälter aus dem erfindungsgemäßen Stahl eingesetzt werden.

## Patentansprüche

1. Verwendung eines austenitischen Stahls folgender Zusammensetzung:
bis zu 0,20 Gew.-% Kohlenstoff,
bis zu 2 Gew.-% Silizium,
10 bis 20 Gew.-% Mangan,
bis zu 2 Gew.-% Chrom,
4 bis 12 Gew.-% Nickel,
bis zu 0,4 Gew.-% Stickstoff,
0,5 bis 10 Gew.-% Aluminium,
1 bis 8 Gew.-% Kupfer,
bis zu 2 Gew.-% Niob,
bis zu 2 Gew.-% Vanadium,
bis zu 2 Gew.-% Titan,
Rest Eisen und übliche Stahlbegleitelemente
als Werkstoff für die Wasserstofftechnik, wobei der Gehalt an Niob und/oder Titan und/oder Vanadium insgesamt mehr als 0,2 Gew.-%, der Gehalt an Kohlenstoff mehr als 0,04 Gew.-% und der Gehalt an Stickstoff mehr als 0,1 Gew.-% beträgt.

2. Verwendung eines austentischen Stahls folgender Zusammensetzung:
bis zu 0,20 Gew.-% Kohlenstoff,
bis zu 1 Gew.-% Silizium,
6 bis 16 Gew.-% Mangan,
10 bis 20 Gew.-% Chrom,
4 bis 12 Gew.-% Nickel,
bis zu 0,4 Gew.-% Stickstoff,
0,5 bis 10 Gew.-% Aluminium,
1 bis 8 Gew.-% Kupfer,
bis zu 2 Gew.-% Niob,
bis zu 2 Gew.-% Vanadium,
bis zu 2 Gew.-% Titan,
Rest Eisen und übliche Stahlbegleitelemente
als Werkstoff für die Wasserstofftechnik, wobei der Gehalt an Niob und/oder Titan und/oder Vanadium insgesamt mehr als 0,2 Gew.-%, der Gehalt an Kohlenstoff mehr als 0,04 Gew.-% und der Gehalt an Stickstoff mehr als 0,1 Gew.-% beträgt.

3. Verwendung nach einem der vorstehenden Ansprüche für die Wasserstofftechnik in Automobilen.

## Claims

1. Use of an austenitic steel having the following composition:
up to 0.20 percent by weight of carbon,
up to 2 percent by weight of silicon,
10 to 20 percent by weight of manganese,
up to 2 percent by weight of chromium,
4 to 12 percent by weight of nickel,
up to 0.4 percent by weight of nitrogen,
0.5 to 10 percent by weight of aluminum,
1 to 8 percent by weight of copper,
up to 2 percent by weight of niobium,
up to 2 percent by weight of vanadium,
up to 2 percent by weight of titanium,
the remainder being iron and standard steel accompanying elements as a material for hydrogen technology, the total content of niobium and/or titanium and/or
vanadium being more than 0.2 percent by weight, the content of carbon being more than 0.04 percent by weight and the content of nitrogen being more than 0.1 percent by weight.

2. Use of an austenitic steel having the following composition:
up to 0.20 percent by weight of carbon,
up to 1 percent by weight of silicon,
6 to 16 percent by weight of manganese,
10 to 20 percent by weight of chromium,
4 to 12 percent by weight of nickel,
up to 0.4 percent by weight of nitrogen,
0.5 to 10 percent by weight of aluminum,
1 to 8 percent by weight of copper,
up to 2 percent by weight of niobium,
up to 2 percent by weight of vanadium,
up to 2 percent by weight of titanium,
the remainder being iron and standard steel accompanying elements as a material for hydrogen technology, the total content of niobium and/or titanium and/or vanadium being more than 0.2 percent by weight, the content of carbon being more than 0.04 percent by weight and the content of nitrogen being more than 0.1 percent by weight.

3. Use according to any of the preceding claims for hydrogen technology in automobiles.

## Revendications

1. Utilisation d'un acier austénitique présentant la composition suivante :
jusqu'à 0,20 % en poids de carbone,
jusqu'à 2 % en poids de silicium,
10 - 20 % en poids de manganèse,
jusqu'à 2 % en poids de chrome,
4 - 12 % en poids de nickel,
jusqu'à 0,4 % en poids d'azote,
0,5 - 10 % en poids d'aluminium
1 - 8 % en poids de cuivre,
jusqu'à 2 % en poids de niobium,
jusqu'à 2 % en poids de vanadium,
jusqu'à 2 % en poids de titane,
un reste de fer et les éléments d'accompagnement de l'acier habituels en tant que matériau pour la technologie de l'hydrogène, le taux de niobium et/ou de titane et/ou de vanadium constituant au total plus de 0,2 % en poids, le taux de carbone plus de 0,04 % en poids et le taux d'azote plus de 0,1 % en poids.

2. Utilisation d'un acier austénitique présentant la composition suivante :
jusqu'à 0,20 % en poids de carbone,
jusqu'à 1 % en poids de silicium,
6 - 16 % en poids de manganèse,
10 - 20 % en poids de chrome,
4 - 12 % en poids de nickel,
jusqu'à 0,4 % en poids d'azote,
0,5 - 10 % en poids d'aluminium
1 - 8 % en poids de cuivre,
jusqu'à 2 % en poids de niobium,
jusqu'à 2 % en poids de vanadium,
jusqu'à 2 % en poids de titane,
un reste de fer et les éléments d'accompagnement de l'acier habituels en tant que matériau pour la technologie de l'hydrogène, le taux de niobium et/ou de titane et/ou de vanadium constituant au total plus de 0,2 % en poids, le taux de carbone plus de 0,04 % en poids et le taux d'azote plus de 0,1 % en poids.

3. Utilisation selon l'une des revendications précédentes pour la technologie de l'hydrogène dans des véhicules automobiles.
